# EUROPEAN PATENT APPLICATION

(11) **EP 1 719 563 A1**
(43) Date of publication of application: **08.11.2006**
(21) Application number: 05026503.2
(22) Date of filing: 05.12.2005
(51) Int. Cl.: B09B 3/00, B09B 5/00, H01H 29/00

(54) **Toxic material containing device and method for reducing toxicity of the toxic material in the containing device**

(30) Priority: 06.05.2005 US 123375
(71) Applicant: AGILENT TECHNOLOGIES, INC. (A Delaware Corporation), Palo Alto, CA 94306-2024 (US)
(72) Inventor: Aimi, Marco, Agilent Technologies, Inc., Loveland Colorado 80537-0599 (US); Beerling, Timothy Eric, Agilent Techn., Inc., Loveland Colorado 80537-0599 (US)
(74) Representative: Schoppe, Fritz

(57) **Abstract**

Device and method for reducing toxicity of a toxic material (106, 406) in a toxic material containing device (100, 400). A toxic material containing device (100, 400) has a first chamber (104, 404) containing a toxic material (106, 406) and a second chamber (108, 408) containing a neutralizing material (110, 410) capable of reducing the toxicity of the toxic material (106, 406) when the toxic material (106, 406) and the neutralizing material (110, 410) are combined. A control mechanism (122, 422) enables selective combining of the toxic material (106, 406) and the neutralizing material (110, 410) to provide a combined material (230) that is less toxic than the toxic material (106, 406). The device and method enable the toxicity of a toxic material (106, 406) in a device (100, 400), such as liquid mercury in a liquid mercury containing device, to be reduced to a safe level to facilitate safe disposal of the device (100, 400).

## Description

### DESCRIPTION OF RELATED ART

Liquid mercury can be found in many important products including thermometers, switches and relays. Liquid mercury, however, is highly toxic; and, as a result, devices that contain liquid mercury are receiving substantial attention in today's environmentally conscious climate. Of particular concern is the disposal of devices that contain liquid mercury. Typically, such devices are disposed of with the mercury contained therein in a liquid state. As a result, there is a risk that mercury can leak from the devices, thus adversely affecting the environment and creating a possible health risk.

Because of concerns regarding the use of liquid mercury, the disposal of devices that contain liquid mercury has become an active topic for governmental intervention. For example, regulations currently in effect in many jurisdictions limit the amount of liquid mercury that may be included in a device, and some regulations include requirements that will eventually result in a complete ban of the use of liquid mercury in consumer devices. In Europe, regulations are currently under discussion that would regulate homogeneous materials that contain more than 0.1 percent mercury by weight. These regulations, when enacted, may apply to all devices (with the exception of medical, and control and monitoring equipment) that contain liquid mercury as well as to devices that contain mercury bound in another state, such as mercury containing alloys.

In general, current and future regulations that control the use and disposal of devices that contain liquid mercury or other toxic materials are significantly limiting the marketability of such devices.

### SUMMARY OF THE INVENTION

In accordance with the invention, a toxic material containing device and a method for reducing toxicity of a toxic material in a toxic material containing device is provided. A toxic material containing device has a first chamber containing a toxic material, and a second chamber containing a neutralizing material capable of reducing the toxicity of the toxic material when the toxic material and the neutralizing material are combined. A control mechanism enables selective combining of the toxic material and the neutralizing material to provide a combined material that is less toxic than the toxic material. The device and method enable the toxicity of liquid mercury or other toxic materials contained in a device to be reduced to an acceptable level to facilitate safe disposal of the device.

### BRIEF DESCRIPTION OF THE DRAWINGS

Furthermore, the invention provides embodiments and other features and advantages in addition to or in lieu of those discussed above. Many of these features and advantages are apparent from the description below with reference to the following drawings.
**FIG. 1** schematically illustrates a liquid mercury switch according to an exemplary embodiment in accordance with the invention;
**FIG. 2** schematically illustrates the liquid mercury switch of **FIG. 1** in the process of being modified to reduce the toxicity of the liquid mercury therein according to an exemplary embodiment in accordance with the invention;
**FIG. 3** schematically illustrates the liquid mercury switch of **FIG. 1** after being modified to reduce the toxicity of the liquid mercury therein according to an exemplary embodiment in accordance with the invention;
**FIG. 4** schematically illustrates a liquid mercury switch according to a further exemplary embodiment in accordance with the invention; and
**FIG. 5** is a flowchart that illustrates a method for reducing toxicity of a toxic material in a toxic material containing device according to an exemplary embodiment in accordance with the invention.

### DETAILED DESCRIPTION OF THE EXEMPLARY EMBODIMENTS OF THE INVENTION

Exemplary embodiments in accordance with the invention provide a toxic material containing device and a method for reducing toxicity of a toxic material in a toxic material containing device.

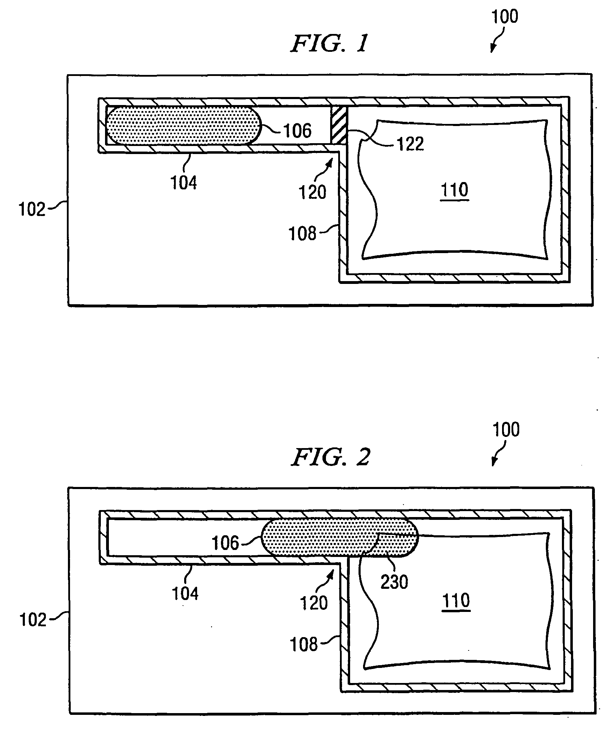

**FIG. 1** schematically illustrates a liquid mercury switch according to an exemplary embodiment in accordance with the invention. The switch is generally designated by reference number **100** and includes switch body **102** having first chamber **104** for containing liquid mercury **106,** and second chamber **108** for containing neutralizing material **110** capable of reducing the toxicity of liquid mercury.

Neutralizing material **110** in second chamber **108** is a material that is capable of combining with liquid mercury to form a compound containing both mercury and the neutralizing material and that is less toxic than liquid mercury. According to an exemplary embodiment in accordance with the invention, neutralizing material **110** is a metal or a metal alloy that is capable of both absorbing and combining with liquid mercury to form an intermetallic alloy. Examples of neutralizing materials that will absorb and combine with liquid mercury to form an intermetallic alloy include gold, tin and indium, although it is not intended to limit the invention to any particular neutralizing material. In many applications, in fact, the particular neutralizing material selected will depend on the type and size of the device and the ease with which the neutralizing material can be incorporated in the device.

Second chamber **108** containing neutralizing material **110** is preferably positioned within body **102** of liquid mercury switch **100** in such a manner that it will not interfere with the performance of switch **100,** for example, by causing premature mixing of the liquid mercury and the neutralizing material, or by undesirably affecting the RF performance of the switch. First chamber **104** and second chamber **108** are, however, positioned relative to one another to provide interface **120** therebetween. Interface **120** enables communication between chambers **104** and **108** so that liquid mercury **106** in first chamber **104** can flow into second chamber **108** and combine with neutralizing material **110** in second chamber **108** to provide a combined material that is less toxic than liquid mercury.

Control mechanism **122** is positioned at interface **120** to selectively control combining of the liquid mercury and the neutralizing material. In particular, control mechanism **122** is a mechanism that will normally close interface **120** to prevent liquid mercury **106** in first chamber **104** from flowing into second chamber **108** to combine with neutralizing material **110.** According to an exemplary embodiment in accordance with the invention, control mechanism **122** prevents liquid mercury **106** and neutralizing material **110** from combining during normal use of switch **100.** When, however, it is desired to dispose of switch **100,** for example, when switch **100** has reached the end of its useful life, control mechanism **122** is enabled to allow liquid mercury **106** to flow through interface **120** into second chamber **108** to combine with neutralizing material **110.**

Control mechanism **122** may take several forms. In the exemplary embodiment in accordance with the invention illustrated in **FIG.1,** control mechanism **122** comprises a seal that normally closes interface **120.** When it is desired to dispose of switch **100,** seal **122** is removed to enable liquid mercury **106** in first chamber **104** to flow into second chamber **108** and combine with neutralizing material **110.**

**FIG. 2** schematically illustrates the liquid mercury switch of **FIG. 1** in the process of being modified to reduce the toxicity of the toxic material therein according to an exemplary embodiment in accordance with the invention. As shown in **FIG. 2,** seal **122** has been removed and is no longer in place; and liquid mercury **106** is in the process of flowing through interface **120** into second chamber **108** and combining with neutralizing material **110** to provide combined material **230** in second chamber **108.**

Seal **122** can be removed from interface **120** in several ways. For example, seal **122** can be a burst seal formed of a frangible material such as glass or plastic, and removed by physically crushing switch **100** to shatter the seal, or by over-pressurizing first chamber **104** to cause the liquid mercury in first chamber **104** to push against and shatter the seal. Alternatively, seal **122** can be formed of a meltable material such as paraffin, and melted when it desired to dispose of switch **100.** Melting of the seal can be readily accomplished, for example, by activating one or more heating mechanisms provided in the switch in the vicinity of seal **122.**

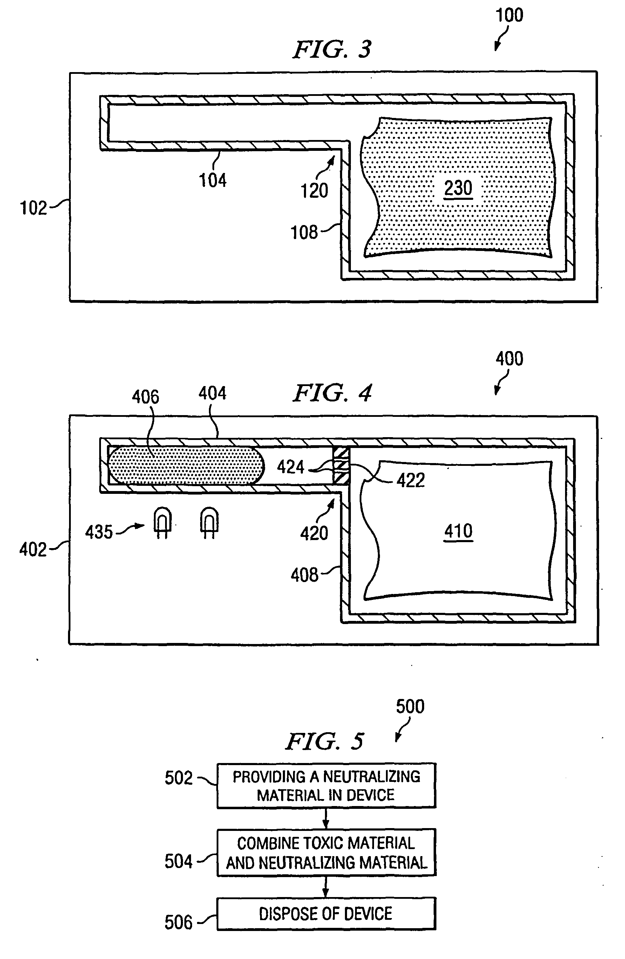

After seal **122** has been removed from interface **120,** liquid mercury **106** in first chamber **104** is free to flow into second chamber **108** to combine with neutralizing material **110** to provide combined material **230** that is less toxic than liquid mercury. **FIG. 3** schematically illustrates the liquid mercury switch of **FIG.** 1 after being modified to reduce the toxicity of the liquid mercury therein according to an exemplary embodiment in accordance with the invention. As shown in **FIG. 3,** all the liquid mercury in first chamber **104** has now flowed into second chamber **108** and has combined with the neutralizing material to provide combined material **230** in second chamber **108.**

The period of time required for the liquid mercury to fully combine with neutralizing material **110** to provide combined material **230** depends on the particular neutralizing material used, the quantities of liquid mercury and neutralizing material to be combined and on other factors. In exemplary embodiments in accordance with the invention, it may require several days up to several weeks or more for the materials to fully combine. In this regard, it is usually desirable to provide neutralizing material **110** in a shape that will maximize its surface area in order so as to cause the liquid mercury to more rapidly be absorbed by and to combine with the neutralizing material.

According to an exemplary embodiment in accordance with the invention, the quantity of neutralizing material **110** in second chamber **108** is selected such that the percentage of liquid mercury in combined material **230** will be sufficiently small that the toxicity of combined material **230** is at a level to permit safe disposal of the switch. Preferably, also, the percentage of liquid mercury in combined material **230** will be sufficiently small so as to satisfy any governmental regulations regarding the disposal of mercury containing devices. For example, by providing a quantity of material **110** in second chamber **108** that is at least 1000 times greater than the quantity of liquid mercury **106** in first chamber **104,** the combined material will contain no more than 0.1 percent mercury, by weight which, it is believed, will satisfy current and anticipated future regulations regarding the handling of mercury.

In accordance with an exemplary embodiment in accordance with the invention, liquid mercury switch **100** is a miniaturized liquid mercury switch for use on integrated circuit chips or the like. The quantity of liquid mercury **106** in first chamber **104** in such a device will typically be less than about 100 micrograms. Accordingly, in order to reduce the toxicity of the liquid mercury therein to a safe level, about 100,000 micrograms (100 milligrams) of neutralizing material will be required. In other liquid mercury containing devices, the quantity of liquid mercury in first chamber **104** can be much larger; and it is not intended to limit the invention to a device containing any particular quantity of liquid mercury.

**FIG. 4** schematically illustrates a liquid mercury switch according to a further exemplary embodiment in accordance with the invention. The liquid mercury switch is generally designated by reference number **400** and includes switch body **402** containing control mechanism **422** normally closing interface **420** between first chamber **404** containing liquid mercury **406,** and second chamber **408** containing neutralizing material **410.** Control mechanism **422** is a capillary mechanism having a plurality of capillaries **424** extending therethrough. During normal operation of switch **400,** capillary mechanism **422** will close interface **420** and prevent liquid mercury from flowing into second chamber **408.** When, however, it is desired to dispose of the switch, capillary mechanism **422** is enabled to cause the liquid mercury to flow through capillaries **424** into second chamber **408** to combine with the neutralizing material in the second chamber.

According to an exemplary embodiment in accordance with the invention, capillary mechanism **422** can include internal heaters **435** or another mechanism to create a pressure gradient between chambers **404** and **408** to drive the liquid mercury through capillaries **424.** Alternatively, capillary mechanism **422** may comprise an electrowetting capillary mechanism for moving the liquid mercury from first chamber **404** to second chamber **408** using an electrostatic force.

**FIG. 5** is a flowchart that illustrates a method for reducing toxicity of a toxic material in a toxic material containing device according to an exemplary embodiment in accordance with the invention. The method is generally designated by reference number **500,** and begins by providing a neutralizing material in the device that is capable of reducing the toxicity of the toxic material in the device (Step **502**). When it is desired to dispose of the toxic material containing device, for example, when the device has fulfilled its useful life, the toxic material and the neutralizing material are combined to form a combined material that is less toxic than the toxic material (Step **504**). The device is then disposed of in a safe, efficient manner (Step **506**).

While what has been described constitute exemplary embodiments in accordance with the invention, it should be recognized that the invention can be varied in numerous ways without departing from the scope thereof. For example, although exemplary embodiments in accordance with the invention described herein comprise liquid mercury switches, it should be understood that the present invention encompasses other liquid mercury containing devices including mercury thermometers, mercury tipped reed relays, mercury switches of any size, or another liquid mercury containing device; and it is not intended to limit the invention to any particular liquid mercury containing device. It should additionally be understood that the present invention encompasses devices that contain toxic materials other than liquid mercury, for example, liquid mercury alloys, and it is not intended to limit the invention to a toxic material containing device containing any particular type of toxic material.

Because embodiments in accordance with the invention can be varied in numerous ways, it should be understood that the invention should be limited only insofar as is required by the scope of the following claims

## Claims

1. A toxic material containing device (100, 400), comprising:
a first chamber (104, 404) containing a toxic material (106, 406);
a second chamber (108. 408) containing a neutralizing material (110, 410) capable of reducing the toxicity of the toxic material (106, 406); and
a control mechanism (122, 422) for selectively combining the toxic material (106, 406) and the neutralizing material (110, 410) to provide a combined material (230) that is less toxic than the toxic material (106, 406).

2. The device according to claim 1, wherein the toxic material (106, 406) comprises liquid mercury.

3. The device according to claim 2, wherein the neutralizing material (110, 410) comprises a metal.

4. The device according to claim 3, wherein the combined material (230) comprises an intermetallic alloy.

5. The device according to claim 2, wherein the device (100, 400) comprises a liquid mercury switch.

6. The device according to claim 1, wherein the control mechanism (122) comprises a seal at an interface (120) between the first (104) and second (108) chambers.

7. The device according to claim 1, wherein the control mechanism (422) comprises a capillary mechanism at an interface (420) between the first (404) and second (408) chambers.

8. A method for reducing toxicity of a toxic material (106, 406) in a toxic material containing device (100, 400), comprising:
providing a neutralizing material (110, 410) in the device (100, 400) capable of reducing the toxicity of a toxic material (106, 406) in the device (100, 400); and
combining the toxic material (106, 406) and the neutralizing material (110, 410) to provide a combined material (230) that is less toxic than the toxic material(106, 406).

9. The method according to claim 8, and further comprising:
preventing the toxic material (106, 406) and the neutralizing material (110, 410) from combining during a period prior to combining the toxic material (106, 406) and the neutralizing material (110, 410).

10. The method according to claim 8, wherein the toxic material (106, 406) comprises liquid mercury, and wherein the toxic material containing device. (100, 400) comprises a liquid mercury containing device.
